# EUROPEAN PATENT APPLICATION

(11) **EP 4 492 171 A1**
(43) Date of publication of application: **15.01.2025**
(21) Application number: 23184491.1
(22) Date of filing: 10.07.2023
(51) Int. Cl.: G05B 19/418, G05B 13/02, D01H 13/14

(54) **A MONITORING UNIT AND A MONITORING METHOD FOR DETECTING A FAULTY OPERATION WITHIN A SPINNING MILL**

(71) Applicant: Rieter AG, 8406 Winterthur (CH)
(72) Inventor: VON GRÜNIGEN, Selwyn, 2100 Kopenhagen (DK); GEHRING, David, 8444 Henggart (CH); SCHMITT, Max, 8050 Zürich (CH)

(57) **Abstract**

This disclosure relates to a monitoring unit (U) and a monitoring method for detecting a faulty operation (fO) within a spinning mill (M). The spinning mill (M) comprises a plurality of textile machines (12,23,34,45,56,67) for processing textile materials (1,2,3,4,5,6,7). The monitoring unit (U) is configured to: access an operating state (oS) of the spinning mill (M), apply the operating state (oS) to a deep learning model (DLM) which has been pre-trained with expert literature (el) of spinning mills (Ms) to detect the faulty operation (fO) within the spinning mill (M) based on the operating state (oS).

## Description

### Field of invention

This disclosure relates to a monitoring unit for detecting a faulty operation within a spinning mil and to a monitoring method for detecting a faulty operation within a spinning mil.

### Description of related art

Spinning mills can include large numbers of textile machines for processing natural or man-made fibers into yarn. For example, textile machines can include blowroom machines, draw frame machines, comber machines, roving frame machines, spinning machines, winding machines, etc. for processing textile materials in an upstream to downstream manner. During operation of a spinning mill, faulty operation such as wear of a machine part of a textile machine can result to a reduced throughput and/or a reduced quality of textile materials. Accordingly, faulty operations within a spinning mill have to be detected immediately and precisely.

### Brief summary of the invention

There may be a need for an improved monitoring unit for detecting a faulty operation within a spinning mill and an improved monitoring method for detecting a faulty operation within a spinning mill.

Such a need may be met by the subject-matter of the independent claims. Advantageous embodiments are defined in the dependent claims.

An aspect of the invention relates to a monitoring unit for detecting a faulty operation within a spinning mill. The spinning mill comprises a plurality of textile machines for processing textile materials. The monitoring unit is configured to: access an operating state of the spinning mill, apply the operating state to a deep learning model which has been pre-trained with expert literature of spinning mills to detect the faulty operation within the spinning mill based on the operating state. Applying the pre-trained deep learning model to an operating state of the spinning mill enables detecting various faulty operations within the spinning mill. For example, the deep learning model can be pre-trained to reliably detect a single particular faulty operation, such as a particular worn part of a particular textile machine. For example, the deep learning model can be pre-trained to detect a faulty operation out of a plurality of possible faulty operations, such as out of a plurality of worn parts of a plurality of textile machines, a plurality of misconfigured settings of a plurality of textile machines, a plurality of environment conditions within the spinning mill. Thus, complexity of the deep learning model can be low for detecting a single faulty operation, or complexity can be high for detecting a faulty operation out of a plurality of possible faulty operations.

In some embodiments, the operating state relates to one or more of a climatic condition at the spinning mill, one or more operating parameters of one or more textile machines, one or more material properties of one or more textile materials, and one or more operating parameters of auxiliary equipment of the spinning mill. The climatic condition can relate to a temperature, a humidity, etc. The operating parameters can relate to an energy consumption, a throughput, a rotation speed, an ends down rate, a break rate, c clearer cut rate, etc. The material properties can relate to a yarn count, a yarn quality, a hairiness, a twist, etc. The auxiliary equipment can relate to an air conditioning equipment, etc.

In some embodiments, the operating state includes time dependent information. For example, a spinning mill data system can collect operating states of the spinning mill at regular time intervals, at predefined points in time, etc. For example, the pre-trained deep learning model can apply a trend analysis, etc. to the operating state to detect the faulty operation within the spinning mill.

In some embodiments, the monitoring unit is further configured to detect an update of the operating state and to apply the updated operating state to the deep learning model to detect the fault operation based on the updated operating state. For example, an update of the operating state can relate to climate information, offline quality tracking, etc. which a not available in real time, but are only available after further analysis, such as an off-line analysis of a material parameter of a textile material (e.g. chemical analysis, etc.) .

In some embodiments, the deep learning model relates to one or more of a deep neural network, DNN, a deep belief network, DBN, a deep reinforcement learning, deep RL, a recurrent neural network, RNN, a convolutional neural network, CNN, a transformer, in particular one or more of a generative pre-trained transformer, GPT, and bidirectional encoder representations from transformers, BERT, and a large language model, LLM. Well known deep learning models can be applied.

In some embodiments, the expert literature relates to one or more of operating manuals of the textile machines, technology reports of the textile machines, operating reports of the spinning mill, in particular of the textile machines, maintenance reports of the spinning mill, in particular of the textile machines, and operating schedules of the spinning mill, in particular of the textile machines. For example, expert literature can relate to manuals of manufactures of textile machines, operating reports of expert persons, maintenance reports of operator persons, operating shift schedules, uptime of textile machines, machine parameters of textile machines during uptime, date and time of last maintenance, machine parts replaced during last maintenance, operating fluids replaced during last maintenance, etc.

In some embodiments, the faulty operation relates to one or more of wear of a machine part of one or more textile machines, wear of an operating fluid of one or more textile machines, one or more machine settings of one or more textile machines and one or more machines settings of one or more upstream textile machines which are not adapted to one or more downstream textile machines.

In some embodiments, detecting the faulty operation further includes determining one or more adjustments within the spinning mill for resolving the faulty operation. For example, the deep learning machine can provide adjustments for textile machines for resolving the detected faulty operation, such as decreasing a spinning speed at a spinning machine for avoiding excessive cut operations at a winding machine.

In some embodiments, the textile machines relate to one or more of a blowroom machine, a carding machine, a draw frame machine, a carding preparation machine, a comber machine, a roving machine, a spinning machine, and a winding machine.

In some embodiments, a spinning mill management system for a spinning mill comprises a spinning mill data system for collecting an operating state of the spinning mill and a monitoring unit as described in the present disclosure.

The invention further relates to a monitoring method for detecting a functional disorder within a spinning mill. The spinning mill comprises a plurality of textile machines for processing textile materials. The method comprises the steps executed at a monitoring unit of as described in the present disclosure of: accessing an operating state of the spinning mill, applying the operating state to a deep learning model which has been pre-trained with expert literature of spinning mills to detect the faulty operation within the spinning mill based on the operating state.

In some embodiments, the operating state relates to one or more of a climatic condition at the spinning mill, one or more operating parameters of one or more textile machines, one or more material properties of one or more textile materials, and one or more operating parameters of auxiliary equipment of the spinning mill.

In some embodiments, the deep learning model relates to one or more of a deep neural network, DNN, a deep belief network, DBN, a deep reinforcement learning, deep RL, a recurrent neural network, RNN, a convolutional neural network, CNN, a transformer, in particular one or more of a generative pre-trained transformer, GPT, and bidirectional encoder representations from transformers, BERT, and a large language model, LLM.

In some embodiments, the expert literature relates to one or more of operating manuals of the textile machines, technology reports of the textile machines, operating reports of the spinning mill, in particular of the textile machines, maintenance reports of the spinning mill, in particular of the textile machines, and operating schedules of the spinning mill, in particular of the textile machines.

In some embodiments, the faulty operation relates to one or more of wear of a machine part of one or more textile machines, wear of an operating fluid of one or more textile machines, one or more machine settings of one or more textile machines and one or more machines settings of one or more upstream textile machines which are not adapted to one or more downstream textile machines.

### Brief description of drawings

The invention will be better understood with the aid of the description of an embodiment given by way of example an illustrated by the figures, in which:
Fig. 1 illustrates schematically a monitoring unit according to the present invention for detecting a faulty operation within a spinning mill; and
Fig. 2 illustrates schematically possible method steps of a monitoring method according to the present invention for detecting a faulty operation within a spinning mill.

### Detailed Description of the invention

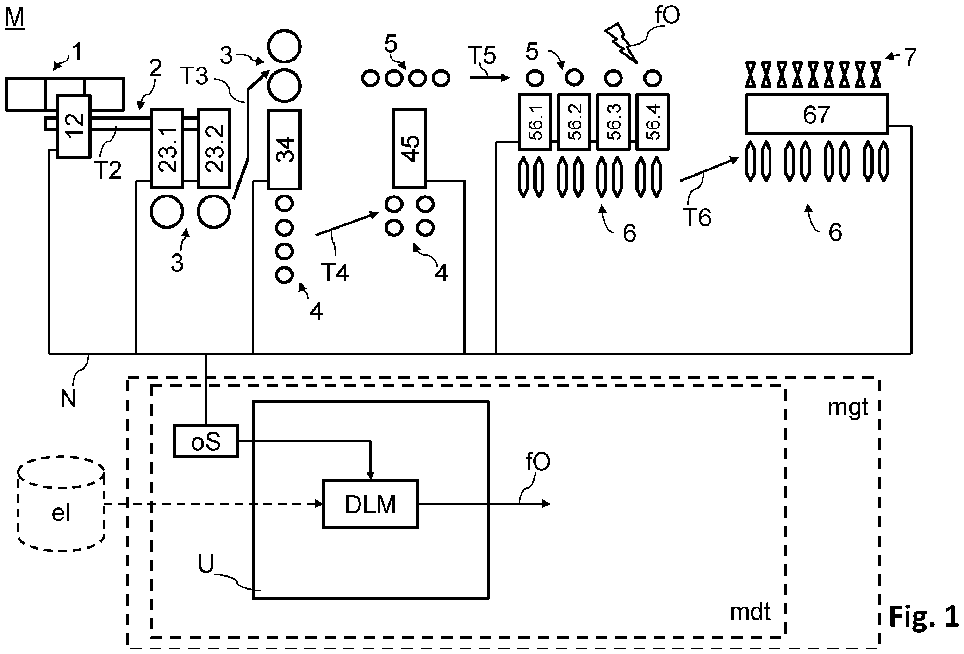

Fig. 1 illustrates schematically a monitoring unit U according to the present invention for detecting a faulty operation fO within a spinning mill M.

As illustrated in Fig. 1, the spinning mill M includes a plurality of textile machines 12, 23, 34, 45, 56, 67. In particular, the textile machines 12, 23, 34, 45, 56, 67 are configured for processing an input textile material 1, such as natural or man-made fibers, into an output textile material 7, such as yarn arranged on yarn bobbins. As indicated in Fig. 1 with reference numerals 23.1, 23.2, 56.1, 56.2, 56.3, 56.4, textile machines can be arranged in a parallel configuration at particular locations, for example for the purpose of increased capacity, for the purpose of redundancy, etc. The textile machines 12, 23, 34, 45, 56, 67 receive upstream a textile material 1, 2, 3, 4, 5, 6, process the received textile material, a deliver downstream the processed textile material 2, 3, 4, 5, 6, 7. Accordingly, the textile machines 12, 23, 34, 45, 56, 67 are arranged in an upstream to downstream manner. The textile machines 12, 23, 34, 45, 56, 67 can relate to blowroom machines, carding machines, draw frame machines, carding preparation machines, comber machines, roving machines, spinning machines, winding machines, etc. As indicated in Fig. 1, the spinning mill M includes transport systems T2, T3, T4, T5, T6 for transporting textile materials 2, 3, 4, 5, 6 from upstream textile machines 1, 2, 3, 4, 5, 6 to downstream textile machines 2, 3, 4, 5, 6, 7. For example, the transport systems T2, T3, T4, T5, T6 can relate to duct systems, trolley systems, rail systems, etc.

As illustrated in Fig. 1, the spinning mill includes a signaling network N, such as a computer network enabling IP (IP: Internet Protocol). As illustrated in Fig. 1, the signaling network N is connected to one or more textile machines 12, 23, 34, 45, 56, 67. For example, the signaling network N is connected to other elements of the spinning mill M, such as the transport systems T1, T2, T3, T4, T5, T6, laboratories for analyzing parameters of textile materials, sensors for sensing a temperature and/or humidity, etc. For example, a spinning mill data system mdt can be arranged for collecting data related to operation of the spinning mill M via the signaling network N, in particular for collecting an operating status oS as described in the present disclosure. For example, the spinning mill data system (mdt) can be arranged within a spinning mill management system (mgt).

As illustrated in Fig. 1, an operating status oS of the spinning mill M is collected via the signaling network N. For example, as illustrated in Fig. 1, the operating status oS of the spinning mill M is collected by a spinning mill data system mdt. For example, for the purpose of collecting an operating status oS of the spinning mill M, various sensors can be connected to the signal network N and arranged at various locations within the spinning mill M. For example, the operating status oS relates to a climatic condition at the spinning mill M, such as an air temperature, air humidity, etc. For example, the operating status oS relates to operating parameters of the textile machines, such as an energy consumption, a throughput of textile material (e.g. kg per hour), a rotation speed, an ends down rate (e.g. at a spinning machine), a clearer cut rate (e.g. at a winding machine), etc. For example, the operating status oS relates to material properties of textile materials 1, 2, 3, 4, 5, 6, 7, such as a yarn count, a yarn quality, a hairiness, a twist, etc. For example, the operating status oS relates to operating parameters of auxiliary equipment, such as an air conditioning system, transport systems T1, T2, T3, T4, T5, T6, etc.

The operating status oS can include time dependent information. For example, the operating status oS can include a time series of ends down events of a spinning machine, a time series of clearer cut events of a winding machine, a time series of material properties of textile materials 1, 2, 3, 4, 5, 6,7, etc.

The operating state oS can include information about locations of textile materials 1, 2, 3, 4, 5, 6, 7. For example, locations of textile materials 1, 2, 3, 4, 5, 6, 7 can be determined by accessing operating parameters of textile machines 12, 23, 34, 45, 56, 67 and operating parameters of transport systems T1, T2, T3, T4, T5, T6, for example by accessing a time of completion of the production of a textile material 1, 2, 3, 4, 5, 6, 7, such as a doffing time, and by accessing transport parameters of the transport systems T1, T2, T3, T4, T5, T6 defining transport of the completed textile material 1, 2, 3, 4, 5, 6 from an upstream textile machine 12, 23, 34, 45, 56 to a downstream textile machine 23, 34, 45, 56, 67. For example, locations of textile materials 1, 2, 3, 4, 5, 6, 7 can be determined via a material flow tracking system (track & trace) which is independent from the textile machines 12, 23, 34, 45, 56, 67 and/or of the transport systems T2, T3, T4, T5, T6.

As illustrated in Fig. 1, the spinning mill M can have a faulty operation fO at a textile machine 56.4, for example a worn traveller at a spinning machine. Because of the faulty operation fO, quality and/or quantity of textile materials 6 produced at textile machine 56.4 can be degraded. It is important to detect the faulty operation fO quickly and precisely.

As illustrated in Fig. 1, the monitoring unit U is configured to access the operating state oS of the spinning mill. For example, the monitoring unit U is configured to access respective data stored in a memory of the mill data system mdt.

As illustrated in Fig. 1, the monitoring unit U is configured to apply the operating state oS to a deep learning model DLM which has been pre-trained with expert literature el of spinning mills Ms to detect the faulty operation fO within the spinning mill M based on the operating state oS. For example, as illustrated in Fig. 1, the monitoring unit U includes the deep learning model DLM. For example, the monitoring unit U is configured to access a deep learning model DLM which is arranged remote from the monitoring unit U (not illustrated in Fig. 1), for example a deep learning model DLM arranged in a cloud.

The deep learning model DLM can relate to a deep neural network (DNN), a deep belief network (DBN), a deep reinforcement learning (deep RL), a recurrent neural network (RNN), a convolutional neural network (CNN), a transformer, in particular a generative pre-trained transformer (GPT), and bidirectional encoder representations from transformers (BERT), and/or a large language model (LLM).

The deep learning model DLM includes multiple layers to progressively extract higher-level features directed to a faulty operation fO from the operating state oS of the spinning mill. Deep learning refers to computer-simulate or automate human learning processes from the operating state oS. For example, a first layer can abstract the operating state oS and encode deviations from a predefined operation state, a second layer can abstract the deviations and encode possible reasons for the deviations, a third layer can abstract the reasons for the deviations and encode likely reasons for the deviations, etc. Various strategies can be applied for pre-training the deep learning model DLM with expert literature el of spinning mills M. For example, the expert literature el can include descriptions of operating states oSs of spinning mills Ms and respective faulty operations fOs. For example, based on the expert literature el, the deep learning model DLM can be pre-trained to detect faulty operation fOs within spinning mill Ms based on operating states oSs. Accordingly, after having been pre-trained, for a particular operating state oS, the deep learning model DLM can detect the respective faulty operation fO. For example, deep learning and/or neural networks can relate to extracting features related to hierarchical representations. For example, natural language processing can be involved including language models which derive probabilistically and/or statistically what comes next for enabling a next token prediction and using generative artificially intelligence algorithms to work through the expert literature el.

Expert literature el can relate to operating manuals of textile machines 12, 23, 34, 45, 56, 67, for example to Rieter manuals, manuals of other manufactures, etc. Expert literature el can relate to technology reports of textile machines 12, 23, 34, 45, 56, 67, for example reports about how the spinning mill M has been set up and put into operation, reports about known issues and how they have been solved, reports from technology experts assessing the spinning mill M, reports from research and development trial series and findings, etc. Expert literature el can relate to operating reports of the spinning mill M, in particular of the textile machines 12, 23, 34, 45, 56, 67, for example relating to an uptime of textile machines 12, 23, 34, 45, 56, 67, etc. Expert literature el can relate to maintenance reports of the spinning mill M, in particular of the textile machines 12, 23, 34, 45, 56, 67, for example as regards maintenance plans, preventive and/or predictive maintenance alerts, machine maintenance information (e.g. relating to a "run in" procedure of the machine after replacement of a wear-&tear part), enterprise-resource-planning at the spinning mill M for planning maintenance schedules and monitoring execution of maintenance schedules, last or next replacement of machine parts, etc. Expert literature el can relate to operating schedules of the spinning mill M, in particular of the textile machines 12, 23, 34, 45, 56, 67, for example as regards operating shifts, etc. Expert literature el can relate to data analytics such as unsupervised learning, KMeans clustering, random forest, etc. In particular, expert literature el is not limited to written text fragments.

Pre-training of the deep learning model DLM can be performed by the monitoring unit U, by a dedicated computer such as a cloud platform, etc. The monitoring unit U, the dedicated computer, etc. can be configured to automatically detect the availability of new expert literature el and update the pre-training of the deep learning model DLM accordingly. For example, the monitoring unit U, a cloud platform, etc. can be configured to detect updated expert literature el at various sources such as manuals of manufacturers, technology reports, operating reports, etc. of textile machines 12, 23, 34, 45, 56, 67 and update the pre-training of the deep learning model DLM upon receipt of updated expert literature el. Detecting updated expert literature el can relate to information which is pushed from the sources and/or to information which is pulled from the sources.

The monitoring unit U can be configured to select the deep learning model DLM from a set of deep learning models using a version number. For example, the version number can enable to select a deep learning model DLM which has proved to be particularly effective. For example, the version number can enable to select a deep learning model which is adapted to a particular process within the spinning mill, such as a particular spinning process (e.g. ring spinning, rotor spinning, airjet spinning, etc.).

The faulty operation fO can relate to wear of a machine part of a textile machine 12, 23, 34, 45, 56, 67, such as wear of a traveller, etc. The faulty operation fO can relate to wear of an operating fluid of a textile machine 12, 23, 34, 45, 56, 67, such as wear of a lubricant, etc. The fault operation fO can relate to a machine setting of a textile machine 12, 23, 34, 45, 56, 67, such as a wrongly adjusted rotation speed, etc. The fault operation fO can relate to machine settings of upstream textile machines 12, 23, 34, 45, 56, 67 which are not adapted to downstream textile machines 12, 23, 34, 45, 56, 67, such as a rotations speed of an upstream spinning machine which results in a quality of a textile material which is not adapted for a downstream winding machine, etc.

The monitoring unit U can be configured to determine an adjustment withing the spinning mill for resolving the faulty operation fO. For example, the adjustment can relate to a replacement of a machine part of a textile machine 12, 23, 34, 45, 56, 67, to an adjustment of a machine parameter of a textile machine 12, 23, 34, 45, 56, 67, etc.

The deep learning model DLM is a subdomain of machine learning, which is a subdomain of artificial intelligence. The domain of the deep learning model DLM includes the subdomain of generative artificial intelligence, in particular Ada, Babage, Curie, Davinci, GPT-35-turbo, GPT-4, Cushman-codex, Davinci-codex, etc.

The monitoring unit U can include a memory for storing instructions related to the deep learning model DLM and to one or more processors for executing the stored instructions, thereby applying the operating state oS to the deep learning model DLM to detect the faulty operation fO within the spinning mill. The monitoring unit U and the deep learning model DLM can relate to software instructions being stored in a memory and being executed by one or more processors, thereby applying the operating state oS to the deep learning model DLM to detect the faulty operation fO within the spinning mill M.

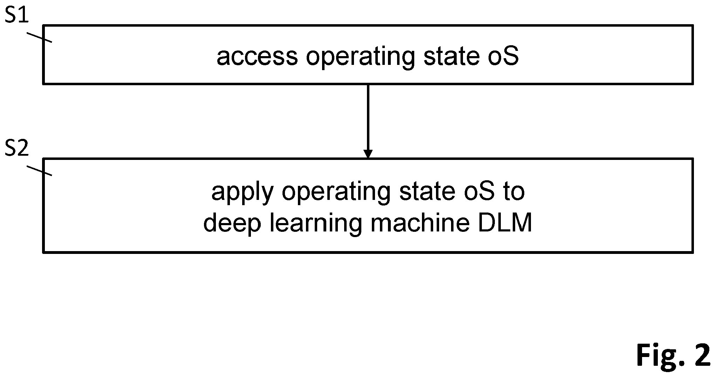

Fig. 2 illustrates schematically possible method steps of a monitoring method for detecting a faulty operation fO within a spinning mill M.

Finally, it should be noted that the term "comprising" does not exclude other elements or steps and the "a" or "an" does not exclude a plurality. Also elements described in association with different embodiments may be combined. It should also be noted that reference signs in the claims should not be construed as limiting the scope of the claims.

### Reference numerals/signs

- M: spinning mill
- 12,23,34,45,56,67: textile machines
- 1,2,3,4,5,6,7: textile materials
- 1: input textile material
- 7: output textile material
- T2,T3,T4,T5,T6: transport systems
- N: signaling network
- U: monitoring unit
- fO: faulty operation
- oS: operating state
- DLM: deep learning model
- el: expert literature
- mdt: spinning mill data system
- mgt: spinning mill management system

## Claims

1. A monitoring unit (U) for detecting a faulty operation (fO) within a spinning mill (M), wherein the spinning mill (M) comprises a plurality of textile machines (12,23,34,45,56,67) for processing textile materials (1,2,3,4,5,6,7), wherein the monitoring unit (U) is configured to:
access an operating state (oS) of the spinning mill (M),
apply the operating state (oS) to a deep learning model (DLM) which has been pre-trained with expert literature (el) of spinning mills (Ms) to detect the faulty operation (fO) within the spinning mill (M) based on the operating state (oS).

2. The monitoring unit (U) according to claim 1, wherein the operating state (oS) relates to one or more of a climatic condition at the spinning mill (M), one or more operating parameters of one or more textile machines (12,23,34,45,56,67), one or more material properties of one or more textile materials (1,2,3,4,5,6,7), and one or more operating parameters of auxiliary equipment of the spinning mill (M).

3. The monitoring unit (U) according to claim 1 or 2, wherein the operating state (S) includes time dependent information.

4. The monitoring unit (U) according to one of claims 1 to 3, further configured to detect an update of the operating state (oS) and to apply the updated operating state (oS) to the deep learning model (DLM) to detect the fault operation (fO) based on the updated operating state (oS).

5. The monitoring unit (U) according to one of claims 1 to 4, wherein the deep learning model (DLM) relates to one or more of a deep neural network, DNN, a deep belief network, DBN, a deep reinforcement learning, deep RL, a recurrent neural network, RNN, a convolutional neural network, CNN, a transformer, in particular one or more of a generative pre-trained transformer, GPT, and bidirectional encoder representations from transformers, BERT, and a large language model, LLM.

6. The monitoring unit (U) according to one of claims 1 to 5, wherein the expert literature (el) relates to one or more of operating manuals of the textile machines (12,23,34,45,56,67), technology reports of the textile machines (12,23,34,45,56,67), operating reports of the spinning mill (M), in particular of the textile machines (12,23,34,45,56,67), maintenance reports of the spinning mill (M), in particular of the textile machines (12,23,34,45,56,67), and operating schedules of the spinning mill (M), in particular of the textile machines (12,23,34,45,56,67).

7. The monitoring unit (U) according to one of claims 1 to 6, wherein the faulty operation (fO) relates to one or more of wear of a machine part of one or more textile machines (12,23,34,45,56,67), wear of an operating fluid of one or more textile machines (12,23,34,45,56,67), one or more machine settings of one or more textile machines (12,23,34,45,56,67) and one or more machines settings of one or more upstream textile machines (12,23,34,45,56,67) which are not adapted to one or more downstream textile machines (12,23,34,45,56,67).

8. The monitoring device (9) according to one of claims 1 to 7, wherein detecting the faulty operation (fO) further includes determining one or more adjustments within the spinning mill (M) for resolving the faulty operation (fO).

9. The monitoring device (9) according to one of claims 1 to 8, wherein the textile machines (12,23,34,45,56,67) relate to one or more of a blowroom machine, a carding machine, a draw frame machine, a carding preparation machine, a comber machine, a roving machine, a spinning machine, and a winding machine.

10. A spinning mill management system for a spinning mill (M) comprising a spinning mill data system (mdt) for collecting an operating state (oS) of the spinning mill (M) and a monitoring unit (U) according to one of claims 1 to 9.

11. A monitoring method for detecting a functional disorder within a spinning mill (M), wherein the spinning mill (M) comprises a plurality of textile machines (12,23,34,45,56,67) for processing textile materials (1,2,3,4,5,6,7), the method comprising the steps executed at a monitoring unit (U) of:
accessing an operating state (oS) of the spinning mill (M),
applying the operating state (oS) to a deep learning model (DLM) which has been pre-trained with expert literature (el) of spinning mills (Ms) to detect the faulty operation (fO) within the spinning mill (M) based on the operating state (oS).

12. The monitoring method according to claim 11, wherein the operating state (oS) relates to one or more of a climatic condition at the spinning mill (M), one or more operating parameters of one or more textile machines (12,23,34,45,56,67), one or more material properties of one or more textile materials (1,2,3,4,5,6,7), and one or more operating parameters of auxiliary equipment of the spinning mill (M).

13. The monitoring method according to claim 11 or 12, wherein the deep learning model (DLM) relates to one or more of a deep neural network, DNN, a deep belief network, DBN, a deep reinforcement learning, deep RL, a recurrent neural network, RNN, a convolutional neural network, CNN, a transformer, in particular one or more of a generative pre-trained transformer, GPT, and bidirectional encoder representations from transformers, BERT, and a large language model, LLM.

14. The monitoring method according to one of claims 11 to 13, wherein the expert literature (el) relates to one or more of operating manuals of the textile machines (12,23,34,45,56,67), technology reports of the textile machines (12,23,34,45,56,67), operating reports of the spinning mill (M), in particular of the textile machines (12,23,34,45,56,67), maintenance reports of the spinning mill (M), in particular of the textile machines (12,23,34,45,56,67), and operating schedules of the spinning mill (M), in particular of the textile machines (12,23,34,45,56,67).

15. The monitoring method according to one of claims 11 to 14, wherein the faulty operation (fO) relates to one or more of wear of a machine part of one or more textile machines (12,23,34,45,56,67), wear of an operating fluid of one or more textile machines (12,23,34,45,56,67), one or more machine settings of one or more textile machines (12,23,34,45,56,67) and one or more machines settings of one or more upstream textile machines (12,23,34,45,56,67) which are not adapted to one or more downstream textile machines (12,23,34,45,56,67).
